(19) Europäisches Patentamt
European Patent Office
Office européen des brevets

(11) **EP 1 664 678 B1**

(12) **EUROPEAN PATENT SPECIFICATION**

(45) Date of publication and mention
of the grant of the patent:
**24.04.2013 Bulletin 2013/17**

(51) Int Cl.:
***G01C 21/00*** *(2006.01)*   ***G01C 21/16*** *(2006.01)*
***G05D 1/10*** *(2006.01)*

(21) Application number: **04786654.6**

(22) Date of filing: **23.09.2004**

(86) International application number:
**PCT/CA2004/001734**

(87) International publication number:
**WO 2005/029001 (31.03.2005 Gazette 2005/13)**

(54) **METHOD AND APPARATUS FOR DETERMINING THE POSITION OF AN UNDERWATER OBJECT IN REAL-TIME**

VERFAHREN UND VORRICHTUNG ZUR BESTIMMUNG DER POSITION EINES UNTERWASSEROBJEKTS IN ECHTZEIT

PROCEDE ET DISPOSITIF PERMETTANT DE DETERMINER LA POSITION D'UN OBJET SOUS L'EAU EN TEMPS REEL

(84) Designated Contracting States:
**AT BE BG CH CY CZ DE DK EE ES FI FR GB GR HU IE IT LI LU MC NL PL PT RO SE SI SK TR**

(30) Priority: **23.09.2003 US 504967 P**

(43) Date of publication of application:
**07.06.2006 Bulletin 2006/23**

(73) Proprietor: **HYDRO-QUEBEC**
**Montréal, Québec H3A 3G4 (CA)**

(72) Inventors:
• **BLAIN, Michel**
**Saint-Amable, Québec J0L 1N0 (CA)**
• **HOUDE, Régis**
**Sainte-Julie, Québec J3E 3C1 (CA)**
• **LALIBERTÉ, Richard**
**Sainte-Julie, Québec J3E 3C1 (CA)**

(74) Representative: **Cabinet Plasseraud**
**52, rue de la Victoire**
**75440 Paris Cedex 09 (FR)**

(56) References cited:
**US-A- 5 928 309**       **US-A1- 2003 078 706**
**US-A1- 2004 039 509**

• **WOOLVEN S ET AL: "POS/SV-an aided inertial navigation system for submersible vehicles" OCEANS '98 CONFERENCE PROCEEDINGS NICE, FRANCE 28 SEPT.-1 OCT. 1998, NEW YORK, NY, USA,IEEE, US, vol. 1, 28 September 1998 (1998-09-28), pages 103-107, XP010311762 ISBN: 978-0-7803-5045-8**
• **VAGANAY J ET AL: "Outlier rejection for autonomous acoustic navigation" ROBOTICS AND AUTOMATION, 1996. PROCEEDINGS., 1996 IEEE INTERNATIONAL C ONFERENCE ON MINNEAPOLIS, MN, USA 22-28 APRIL 1996, NEW YORK, NY, USA,IEEE, US, vol. 3, 22 April 1996 (1996-04-22), pages 2174-2181, XP010163060 ISBN: 978-0-7803-2988-1**
• **Geyer E M; Foltz J M; Warren R S: "Acoustic beacon-aided navigation in the deep ocean" In: Analytic Sci. Corp., Reading, MA; USA: "IEEE 1978 Position Location and Navigation Symposium, 6-9 Nov. 1978" 1978, IEEE 1978 Position Location and Navigation Symposium , New York, NY, USA , XP009126451 , pages 225-230 * abstract; figure 1 * * page 225, left-hand column, paragraph 1 - right-hand column, paragraph 2; figures 2,3 ***

**Description**

## CROSS-REFERENCE TO RELATED APPLICATIONS

This is the first application filed for the present invention.

## TECHNICAL FIELD

This invention relates to the field of robotics. More precisely, this invention pertains to the field of determining the position of an underwater remotely operated vehicle in real-time.

## BACKGROUND OF THE INVENTION

As part of a water dam security program, an underwater remotely operated vehicle (ROV) has been under development for the past few years. Such remotely operated vehicle may be used in various inspection tasks taking place in underwater environments. The vehicle is preferably used for the inspection of dam surfaces, of rock concrete interface, of underwater equipment related to turbine production and in order to locate and size major defects.

Someone skilled in the art appreciates that over the years, deterioration of the dam concrete and other immerged elements needs to be repaired. Inspection is therefore performed in order to prepare rehabilitation work. Obstruction of water intake is also inspected prior to cleaning process.

As the remotely operated vehicle inspects the dam, cracks or defects on the surface are identified using for instance an on-board camera, precisely located and the remotely operated vehicle is reproduced in a virtual environment. The virtual environment consists of a complete scaled graphical model of the dam (as disclosed for instance in Côté, J., Lavallée, J. "Augmented Reality Graphic, Interface for Upstream Dam Inspection", SPIE, Telemanipulator and Telepresence Technologies II, Philadelphia, October 1995) and the graphical and dynamical model of the submarine. Later on, maintenance crews will return to the identified defects to follow their evolution in time or to perform restoration work. In order to perform such tasks efficiently, the remotely operated vehicle must be equipped with a precise navigation system, giving its exact position relative to the dam in real-time. State of the art navigation systems do not provide real-time navigation for underwater vehicles because the sampling rate for measuring position and the precision of the system are usually not high enough.

In an environment where visibility in water is very low or when the structure of the dam is very complex, a navigation system providing real time positioning is necessary to locate the remotely operated vehicle.

For instance, "pos/sv - an aided inertial navigation system for submersible vehicles", Steeven Woolven, discloses an aided inertial navigation system that implements a tightly coupled Kalman filter to blend with the best possible accuracy inertial data from a light-weight inertial subsystem and aiding data obtained from a variety of sensors. However, dysfunctions of the real-time system may occur, due to the sensors which sent data at an unfixed rate, because of system errors for example, and data acquisition may be intermittent. In this case, the position estimation of the submersible vehicle is not really accurate.

There is therefore a need for a method and apparatus that will overcome the above-identified drawbacks.

## SUMMARY OF THE INVENTION

It is an object of the invention to provide a method for providing a real-time positioning of a remotely operated vehicle operating under water.

Another object of the invention is to provide an apparatus for positioning in real-time a remotely operated vehicle operating under water.

According to an aspect of the invention, there is provided a method for determining a position underwater in real-time of an object according to claim 1.

According to another aspect of the invention, there is provided an apparatus for determining a position in real-time of an object underwater according to claim 9.

## BRIEF DESCRIPTION OF THE DRAWINGS

Further features and advantages of the present invention will become apparent from the following detailed description, taken in combination with the appended drawings, in which:

Fig. 1 is a block diagram which shows a visualization system in accordance with a preferred embodiment of the invention;

Fig. 2 is a graph which shows Kalman filter compensation for position drift of the Doppler velocity sensor unit 14;

Fig. 3 is a graph which shows impact, on position estimate, of the acoustic position delay and Doppler velocity sensor unit 14 failures;

Fig. 4 is a graph which shows position estimate corrected for the acoustic position delay and Doppler velocity sensor unit 14 failures;

Fig. 5 is a graph which shows calibration errors effect on the position of the Doppler velocity sensor unit 14 system;

Fig. 6 is a graph which shows experimental results of the impact of Doppler velocity sensor unit 14 failures on the position estimates;

Fig. 7 is a graph which shows experimental results of the Z position estimate during Doppler velocity sensor unit 14 failures; and

Fig. 8 is a block diagram which shows an embodiment where a navigation system is advantageously used.

It will be noted that throughout the appended drawings, like features are identified by like reference numerals..

## DETAILED DESCRIPTION OF THE PREFERRED EMBODIMENT

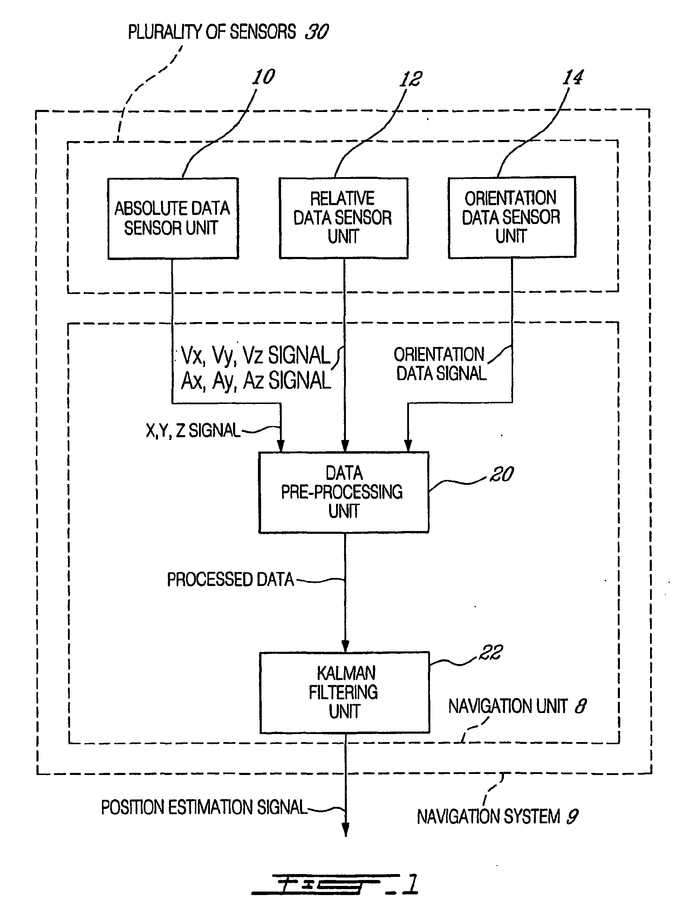

Now referring to Fig. 1, there is shown a block diagram which shows a navigation system 9 in accordance with a preferred embodiment of the invention.

A navigation system comprises a data pre-processing unit 20 and a Kalman filtering unit 22.

It will be appreciated that in the case where a failure/malfunction of a given sensor is detected, the data provided by the given sensor is discarded.

The data pre-processing unit 20 receives a X, Y, Z signal originating from an absolute data sensor unit 10, a velocity signal (Vx, Vy, Vz) and an acceleration signal Ax, Ay and Az provided by a relative data sensor unit 12 and an orientation data signal provided by an orientation data sensor unit 14.

The absolute data sensor unit 10 provides an absolute position data signal at a first sampling frequency with a mean position error equal to zero. It will be appreciated that in one embodiment of the invention, the absolute data sensor unit 10 may be referred to as a position sensor unit.

The relative data sensor unit 12 provides a relative data signal at a second sampling frequency. It will be appreciated that in one embodiment of the invention, the relative data sensor unit 12 may be referred to as a instantaneous velocity sensor unit. In fact, such relative data sensor unit 12 provides an instantaneous velocity, resulting in a position estimate with a mean error which is not equal to zero.

It will be appreciated that the second sampling frequency is substantially higher than the first sampling frequency.

It will be appreciated that the absolute data sensor unit 10 comprises at least one of a bathymeter providing a Z signal and an acoustic sensor providing an X and Y signal.

It will further be appreciated that the relative data sensor unit 12 comprises at least one of a Doppler sensor providing a Vx, Vy and Vz signal and an accelerometer providing an Ax, Ay and Az signal.

It will further be appreciated that the orientation data sensor unit 14 comprises at least one of gyroscope sensors providing $\Omega_X$, $\Omega_Y$ and $\Omega_Z$ signal, an inclinometer providing $\Omega_X$ and $\Omega_Y$ signal and a compass providing a $\Omega_Z$ signal.

The data pre-processing unit 20 pre-processes the received data and provides processed data to the Kalman filtering unit 22.

As explained below, the Kalman filtering unit 22 provides a position estimation signal.

In the preferred embodiment of the invention, the remotely operated vehicle navigation system comprises a plurality of sensors 30, providing information on the vehicle's position and movement, and a navigation unit 8. Preferably, sensor data provided by the plurality of sensors 30 is redundant in order to improve position estimates and overcome sensor failures.

As disclosed below, the navigation unit 8 uses sensor data provided by the plurality of sensors 30 and evaluates the best possible estimate of the position of the vehicle. As disclosed below, the navigation unit 8 operates using Kalman filtering techniques in the preferred embodiment.

More precisely, the navigation unit 8 merges the position signal provided by the absolute data sensor unit 10 and the velocity signal provided by the relative data sensor unit 12 using an orientation signal provided by the orientation data sensor unit 14 in order to provide a real-time position estimation signal.

In the preferred embodiment, the absolute data sensor unit 10 comprises a bathymeter sensor unit providing a Z signal and an acoustic sensor unit providing an X and Y signal.

Still in the preferred embodiment of the invention, the relative data sensor unit 12 comprises a Doppler sensor unit providing a Vx, Vy, Vz signal and an accelerometer sensor unit providing an Ax, Ay, Az signal.

The orientation data sensor unit 14 comprises, in the preferred embodiment of the invention, a gyroscope sensor unit providing an $\Omega_X$, $\Omega_Y$ and $\Omega_Z$ signal, an inclinometer providing an $\Omega_X$ and $\Omega_Y$ signal and a compass providing a $\Omega_Z$ signal. It will be appreciated that redundancy is advantageously used in order to avoid sensor failures.

Prior art work related on navigation systems which uses Doppler sensors and acoustic sensors may be found in Whitcomb, L. L., Yoerger, D. R., Hanumant, S. "Combined Doppler/LBL Based Navigation of Underwater Vehicles," Proc. of the 11th International Symposium on Unmanned Untethered Submersible Technology, Durham, NH, August 1999 and in Spindel, R. C., Porer, R.P., Marquet, W. M., Durham, J. L. "A high-resolution pulse-Doppler underwater acoustic navigation system." IEEE Journal of Oceanic Engineering, vol.OE-1, no.1, pp. 6-13, 1976).

Someone skilled in the art will appreciate that in real systems, sensors do not always send data at a fixed rate and data acquisition is often intermittent. So additional developments take place to deal with asynchronous data delivery and delays in measurements. A delay in a measurement is preferably defined as the time between a moment where a measurement is valid and a moment where it is available to the navigation unit.

It will be appreciated that the navigation unit is preferably adapted to accept various rates of data originating from the plurality of sensors 30. Furthermore a filter switching process is used to ensure that only valid data is used for the position estimate.

It will be appreciated that the gyroscope and accelerometer sensor unit, usually provides position, linear velocities and accelerations, orientation, and angular velocities. However, in the preferred embodiment of the invention, only orientation, angular velocities, and accelerations are provided by the gyroscope and accelerometer sensor unit.

As disclosed previously, the plurality of sensors of the navigation system 9 comprise the acoustic sensor unit which provides the X, Y, Z signal of a sonar transducer mounted on the submarine.

It will be appreciated that the position signal provided by the acoustic position sensor unit and the Z signal provided by the bathymeter sensor unit are combined together to provide the absolute position signal. It will be appreciated that, in the preferred embodiment of the invention, the Z signal is collected from the bathymeter sensor unit rather than from the acoustic position sensor unit as the bathymeter sensor unit provides a much more accurate, faster and reliable measure.

As explained above, the relative data sensor unit 12 of the plurality of sensors 30 of the navigation system 9 further comprise a Doppler velocity sensor unit, commonly identified as DVL, and which provides a X, Y, Z linear velocity signal of the vehicle. Upon integration of the linear velocity signal of the vehicle, position X, Y, and Z is provided.

In the preferred embodiment, the plurality of sensors 30 have the following characteristics:

| Instrument | Variable | Sampling frequency | Precision | Range | Variance |
|---|---|---|---|---|---|
| DVL (RDI 1200) | Vx, Vy, Vz | 6 Hz | ±0.2% ±1 mm/s | 0.5-30 m | 0.00009 |
| Acoustic positioning system (Linquest TrackLink 1500HA) | X, Y Position | 0.25 Hz | ±0.2 m ± 0.5% of distance | 120° cone over 1500 m | 0.005 |
| Bathymeter (Paroscientific 8CDP270-I) | **Z** Position | 5 Hz | ±1 cm | 0-270m | 0.000013 |

Kalman filters are well covered in Brown, R.G., Hwang, P.Y.C. Introduction to Random Signals and Applied Kalman Filtering, 3rd edition, John Wiley & Sons, 1997. As known by someone skilled in the art, a Kalman filter uses an optimal linear estimator based on an iterative and recursive process.

More precisely, the *Kalman* filter recursively evaluates an optimal estimate of the state of a system. Typically, a vector describing the state of a vehicle evolving in a 3D space may be expressed as

$x=[x\ y\ z\ \dot{x}\ \dot{y}\ \dot{z}\ \alpha\ \beta\ \gamma\ \Omega_x\ \Omega_z]$

where $x\ y\ z$ are position coordinates of the vehicle, $\dot{x}\ \dot{y}\ \dot{z}$ are corresponding velocities, $\alpha\ \beta\ \gamma$ are Euler angles describing the orientation of the vehicle and $\Omega_x\ \Omega_y\ \Omega_z$ are the angular velocities.

In the preferred embodiment, the Kalman filter used, in the Kalman filtering unit 22, applies only to the position of the vehicle. X vector is defined as $x=[x\ y\ z\ \dot{x}\ \dot{y}\ \dot{z}]$.

The Kalman filter produces a new estimate of the position of the vehicle when one of the following situations occurs. If a new position signal originating from the acoustic position sensor unit is available, then the Kalman filter of the Kalman filtering unit 22 computes the new estimate with the new position signal (measurement update process). If there is no new position signal available before a fixed amount of time dt, then the *Kalman* filter updates a current position based on previous information of position and velocity (time update process).

As described by following equations 1 and 2, the optimal estimate from the previous iteration, noted X(k-1) is projected in time through state transition matrix A, and the noisy inputs U(k) (relative data sensor unit) are fed to the system through matrix B, relating the inputs to the state.

$$P_{priori} = A \cdot P \cdot A' + Q \quad (1)$$

$$X(k) = A \cdot X(k-1) + B \cdot U(k) \quad (2)$$

In equation 2, the state X is the linear position of the vehicle and U is the input from a linear velocity sensor. Matrices A and B ref lect the kinematics of the system.

Equation 1 projects in time the error covariance matrix P, representing the variance of the error on the estimate state X. Q is the covariance matrix associated with the process noise from the measurements U(k).

This process is formalized by Equations 3 to 5, in which direct noisy state measurements Z(k) coming from the absolute sensor unit 10 are compared with the prior state estimate $X(k_{past})$, yielding a correction to apply to this prior estimate to obtain the new estimate X(k). Matrix H relates the measurements to the state.

$$K = P_{priori} \cdot H' \cdot (H \cdot P_{priori} \cdot H' + R)^{-1} \quad (3)$$

$$X_{corrigé}(k_{past}) = X(k_{past}) + K \cdot (Z - H \cdot X(k_{past})) \quad (4)$$

$$P = (I - K \cdot H) \cdot P_{priori} \quad (5)$$

The importance of each estimation (the prior estimate $X(k_{past})$ and the measurement Z (k)) is determined by the Kalman gain K.

The Kalman gain K is in turn determined by matrices Q and R, which respectively represent the process noise covariance (indirect measurements) and the measurement noise covariance (direct measurements). The Kalman gain K takes a value between 0 and 1, 0 representing the use of the indirect measurements only, 1 representing the direct measurements only.

The error covariance matrix P, modified in equation 1, is again corrected in equation 5 in order to reflect the measurement update process. Continuing with the previous example, Z(k) in equation 4 represents a measurement coming from a position sensor and H is equal to [1 0] since there is direct correspondence between Z and X.

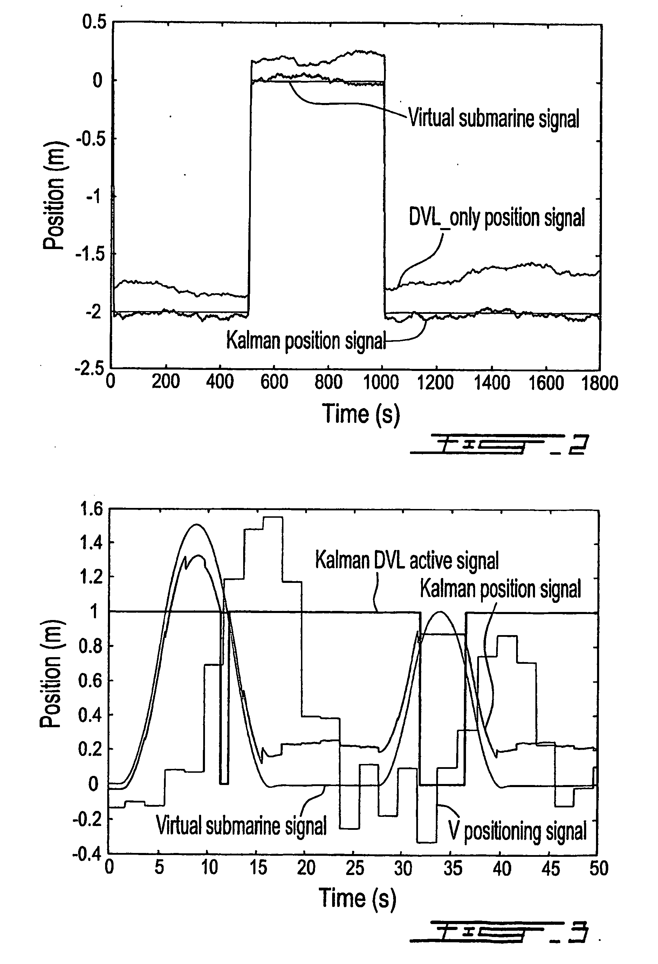

The noise originating from the Doppler velocity sensor unit is accumulated over every iteration because the velocity is integrated to obtain the position. This results in a diverging position error and therefore the acoustic position sensor unit alone becomes unusable over long periods of time as shown in Fig. 2. The position error of a typical direct position sensor, such as the acoustic position sensor unit is important. These systems are subject to intermittence and have larger noise levels over short periods of time. However, their position estimates do not drift over time. The error is close to zero-mean, which makes them more reliable on the long run.

The position estimation signal obtained from the Kalman filtering unit 22 combining both the acoustic position sensor unit and the Doppler velocity sensor unit have been simulated. The results of the simulation are shown in Fig. 2.

As shown in Fig. 2, the combination takes advantages from both the acoustic position sensor unit and the Doppler velocity sensor unit and more precisely of the absence of drift from the acoustic position sensor unit and the smoothness of the velocity signal provided by the Doppler velocity sensor unit.

However, it will be appreciated that the basic Kalman filtering unit 22, which was used for generating the results of the simulation in Fig. 2, does not satisfy the precision required by the application. First, the position signal provided by the acoustic position sensor unit is not valid at the time it becomes available, but at a certain amount of time before. Second, if a sensor fault occurs, it must be detected and the Kalman filtering unit 22 should not incorporate data provided by the faulty sensor in a new estimate. Finally, the update rate of the plurality of sensors may vary with each sensor.

For example, if the vehicle is far from the transponder beacons, the measure will take more time as an acoustic signal is dependent from a distance to the transponder beacons.

It will be appreciated that in the preferred embodiment of the invention, data originating from each sensor preferably require some transformations before being sent to the *Kalman* filtering unit 22.

More precisely, the kinematics model of the vehicle describes its movement relative to an inertial frame called fixed frame. For convenience, the dynamic equations of the vehicle are developed relative to its center of mass. A reference frame identified as local is attached to the center of mass and its orientation corresponds to the principal axis of inertia. Therefore, the position signal and the velocity signal obtained from the plurality of sensors 30 is preferably transformed in order to describe the position and velocity of the local frame relative to the fixed frame expressed in the fixed frame.

In the preferred embodiment, such processing is performed by the data pre-processing unit 20.

The position signal provided by the acoustic position sensor unit is processed as follows.

$$\left[ ^{FIXE}P_{LOCAL} \right]_{FIXE} = \left[ ^{FIXE}P_{PINGER} \right]_{FIXE} - rot\{FIXELOCAL\}\left[ ^{LOCAL}P_{PINGER} \right]_{LOCAL}$$

where $\llcorner^{FIXE}P_{LOCAL}\lrcorner_{FIXE}$ is the position vector of the center of mass of the vehicle with respect to the fixed frame, $\llcorner^{FIXE}P_{PFINGER}\lrcorner_{FIXE}$ is the position vector of the transponder (the emitter portion of the acoustical system, and thus the point whose position is measured by the acoustical system) of the vehicle with respect to the fixed frame, where *rot {FIXELOCAL}* is a rotation matrix for moving from a local frame to the fixed frame in the past. The matrix is built using the orientation provided by the DQI *(rot{FIXE,DQI})* and its orientation on the vehicle (rot{LOCAL,DQI}).

$\llcorner^{LOCAL}P_{PFINGER}\lrcorner_{LOCAL}$ is the position vector of the transponder with respect to the center of mass of the vehicle and it is measured in the frame of the vehicle.

The velocity signal provided by the Doppler velocity sensor unit is processed as follows.

$$\left[ ^{FIXE}V_{LOC} \right]_{FIXE} = ROT\{FIXE,DVL\}\left[ ^{FIXE}V_{DVL} \right]_{DVL}$$
$$- \left[ ^{FIXE}\Omega_{LOC} \right]_{FIXE} \wedge \left( ROT\{FIXE,LOC\}\left[ ^{LOC}P_{DVL} \right]_{LOC} \right) ;$$

where *ROT{FIXE DVL}* is the rotation matrix describing the orientation of the Doppler velocity sensor unit relative to the fixed frame.

$\llcorner^{FIXE}V_{DVL}\lrcorner_{DVL}$ is obtained using the Doppler velocity sensor unit.

$\llcorner^{FIXE}\Omega_{LOC}\lrcorner_{FIXE}$ is the angular velocity of the local frame obtained from the gyroscope sensor unit.

$\llcorner^{LOC}P_{DVL}\lrcorner_{LOC}$ is the position vector of the Doppler velocity sensor unit relative to the local frame expressed in the local frame.

As explained previously, sensors data are provided by the plurality of sensors 30 at different and changing rates.

It will be appreciated that the sensor fusion algorithm accepts asynchronous signals by switching to the appropriate estimation procedure depending on which signal is provided. For instance, the Doppler velocity sensor unit provides the velocity signal at a rate approximately 12 times higher than the rate at which the position signal is provided by the acoustic position sensor unit.

When the Doppler velocity sensor unit and the acoustic position sensor unit provide new data, the Kalman filter unit 22 is used. However, 11 times out of 12 only the Doppler velocity sensor unit provides the velocity signal, and so a simple integration of the velocity signal is used in order to perform the position update, such integration is performed in the Kalman filtering unit 22.

A time stamp is recorded when a position signal is provided by the acoustic position sensor unit. The value of the time stamp is the actual time less a calibrated delay. This time stamp is associated with the position signal.

The position estimate between two position signals is kept in memory. When a new position signal is provided by the acoustic position sensor unit, the algorithm performs a correction on the position estimate recorded in the memory at the time indicated by the time stamp associated with this new data. Then position updates are performed from this time to the actual time using the velocity signal provided by the Doppler velocity sensor unit. In other words, the position update $X(k_{past})$ of Equation 4 is replaced by the new position estimate and then the position is updated by integrating the velocity signal from this new position estimate in the past to the actual time using Equation 2. This integration phase continues until a new position signal provided by the acoustic position sensor unit becomes available. In the preferred embodiment, such processing is performed by the KaLman filtering unit 22.

The data are generated with the dynamic model of the vehicle and its corresponding controller. On Fig. 2 and further, the real position of the model is identified as Virtual submarine signal. A white noise with variance obtained from experimentations, as shown above, is added to the Virtual submarine signal positions in order to generate the position signal provided by the acoustic position sensor unit.

The velocity signal provided by the simulated Doppler velocity sensor unit is obtained from the velocity of the model. The position signal provided by the acoustic position sensor unit is identified as "V Positioning signal" and the Doppler velocity sensor unit is identified as "DVL_only position signal" while the position estimate provided by the Kalman filtering unit is identified as "Kalman position signal".

The results of the first simulation, shown in Fig. 2, shows the Kalman position signal provided by the Kalman filtering unit 22, of the position signals provided using the acoustic position sensor unit and the velocity signal provided by the data Doppler velocity sensor unit.

The vehicle starts at position zero, then reaches the first target at -2 m. At time t = 500 seconds, the vehicle reaches the position target 0 m and returns to the -2 m target at time t = 1000 seconds. The purpose of the simulation is to validate the adequate execution of the Kalman filtering unit 22. The position signal provided by the acoustic position sensor unit are not shown in this graph for clarity. The position drift for the Doppler velocity sensor unit, and shown by the "DVL_only position signal", is very slow and the error becomes significant only after one hour of simulation. The data plotted on this graph represents 30 minutes of simulation starting after four hours of simulation.

It will be appreciated that in this simulation, the position signal provided by the acoustic position sensor unit is generated instantaneously (i.e. without delay), there are no calibration errors on any systems and no sensor failures in this simulation.

Now referring to Fig. 3, there is shown a graph which shows a simulation intended to disclose the impact of delays in the acoustic position sensor unit and failures in the Doppler velocity sensor unit.

A delay of 5 seconds is set for the acoustic position sensor unit. Also, in order to amplify the impact of the position signal provided by the acoustic position sensor unit on the position estimate, the variance related to the acoustic position sensor unit is set to 0.002. During the first 10 seconds, the effect of the delay is that the Kalman position signal curve is behind the Virtual submarine signal curve.

Failure of the Doppler velocity sensor unit 14 occurs at 11 seconds where the Kalman DVL active signal curve changes from level one to level zero and become active again at 12 seconds. During the failure time, the Kalman filtering unit 22 considers the Doppler velocity sensor unit input as zero value. Delays in the acoustic position sensor unit and failures in the Doppler velocity sensor unit are inherent to this navigation system.

At 20 seconds after the beginning of the simulation, the accumulated error of the delay in the acoustic position sensor unit and the failure of the Doppler velocity sensor unit is approximately 20 cm.

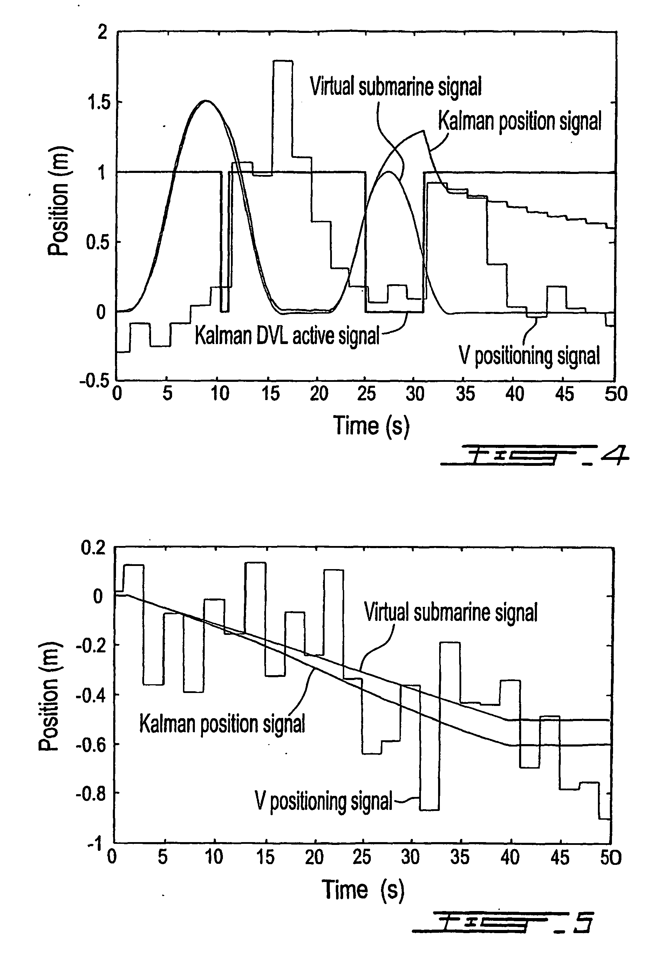

Now referring to Fig. 4, there is shown a further simulation which discloses corrections made for the delay in the acoustic position sensor unit and for the failure of the Doppler velocity sensor unit. The description of the correction applied for the delay in the acoustic position sensor unit has been disclosed previously. The correction applied in the case of the failure of the Doppler velocity sensor unit is very simple in this algorithm and it works fine for small period of time. The algorithm keeps the last valid velocity signal and performs the time update procedure with it. Then the valid velocity is reduced for a certain percentage and the result becomes the new valid velocity for the next time update.

For a longer period of time, the algorithm stops to perform the time update procedure and the controller changes from automatic to manual mode.

During the first 10 seconds of the simulation, the position estimate curve (i.e. "Kalman position signal" curve) follows the position curve (i.e. "Virtual submarine signal" curve) of the model. This represents an improvement compared to the previous simulation. The first Doppler velocity sensor unit failure occurs at 11 seconds as shown by the "Kalman DVL active signal" curve. While there is still a deviation of the position estimate relative to the position of the vehicle, the position error generated by the failure of the Doppler velocity sensor unit is small compared to the one obtained in the previous simulation. At 20 seconds after the beginning - of the simulation, the accumulated error of the delay and Doppler velocity sensor unit failure is less than 5 cm. On the other hand, for a failure of the Doppler velocity sensor unit lasting for more than 5 seconds, as the one starting at 25 seconds, the use of the last valid velocity generates an important error because the vehicle changes its velocity direction during the failure of the Doppler velocity sensor unit. However, as time passes, the position estimate curve is coming closer by small steps to the vehicle position curve under the influence of the acoustic position sensor unit while the vehicle is at rest.

The velocity signal provided by the Doppler velocity sensor unit system is the linear velocity of one particular point on the vehicle. The transformation applied to the velocities depends on the angular velocities and the position coordinates of the centre of the Doppler velocity sensor unit system relative to the local frame. This transformation is necessary and the calibration should be done accurately. In the next simulation, shown in Fig. 5, the Doppler velocity sensor unit is located at (-25 cm, 0, 25 cm) relative to the local frame. However, an error of 5 cm relative to the X and Z axis is made so this transformation considers that the Doppler velocity sensor unit system is located at (-20 cm, 0, -20 cm). The position drift is dependent on the angular displacement and it can be observed from Fig. 5 that a small error in the Doppler velocity sensor unit position generates considerable error on the position of the vehicle.

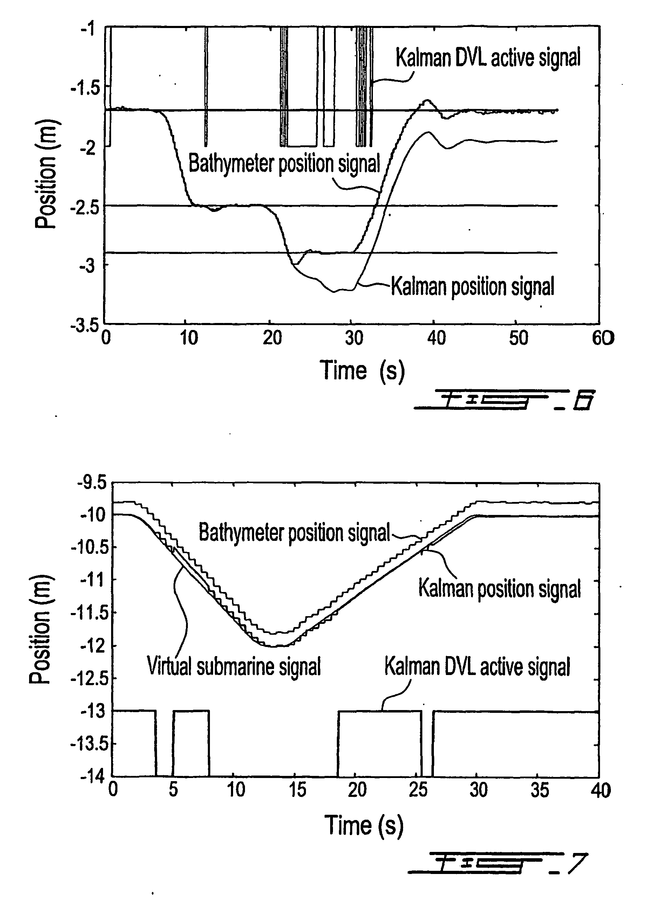

The Bathymeter sensor unit is used for providing the Z coordinate and replaces the acoustic position sensor unit used for the Z coordinate in simulation. However, the interest is more on the observation of the behaviour described previously than on reproduction of the simulation results. In the following figures, the absolute sensor is the bathymeter and the corresponding curve is identified as "Bathymeter position signal". The Bathymeter sensor unit is accurate and it can be considered as a reference to establish a point of comparison with the curve obtained from the Kalman filtering unit 22. The position curve obtained by simple integration of the velocity signal provided by the Doppler velocity sensor unit is not plotted. However, the velocity signal provided by the Doppler velocity sensor unit is the only data used in the Kalman filtering unit 22 so the Kalman position signal curve represents the position computed using the Doppler velocity sensor unit. The "Kalman DVL active signal" curve indicates whether the Doppler velocity sensor unit is active (up level) or not (down level). In Fig. 6, the Doppler velocity sensor unit system has failed many times. For a short time failure, the use of the preceding velocity allows the Kalman filtering unit 22 to keep its curve on the Bathymeter sensor unit curve. However, if the Doppler velocity sensor unit is down for a longer period, the Kalman filtering unit does not give acceptable results. There is an example of that situation starting at 22 seconds in Fig. 6.

For the Z coordinate, since the Bathymeter sensor unit has a fairly good accuracy and has a relatively high bandwidth, the algorithm uses its signal during a Doppler velocity sensor unit failure instead of performing the time update using the preceding valid velocity as shown in Fig. 7.

A navigation system which uses a Kalman filtering unit to merge data received from an acoustic position sensor unit, a Bathymeter sensor unit and a Doppler velocity sensor unit has been disclosed. The impact of the delay from the position signal provided by the acoustic position sensor unit and the failure of the Doppler velocity sensor unit on the position estimate have been highlighted by simulation results. The algorithm of the Kalman filtering unit 22 comprises a correction for a fixed time delay of the acoustic position sensor unit and the simulation results shows an appreciable improvement of the position estimate.

However it is known by someone skilled in the art that the time delay is not fixed. A model of this time delay may therefore be created in order to get the complete benefits of this development. During short failures of the Doppler velocity sensor unit, the navigation algorithm compensates for missing information. It will be appreciated that it is of prime importance to measure accurately the position and orientation of the position systems on the vehicle in order to perform the coordinate transformations relative to the local frame precisely.

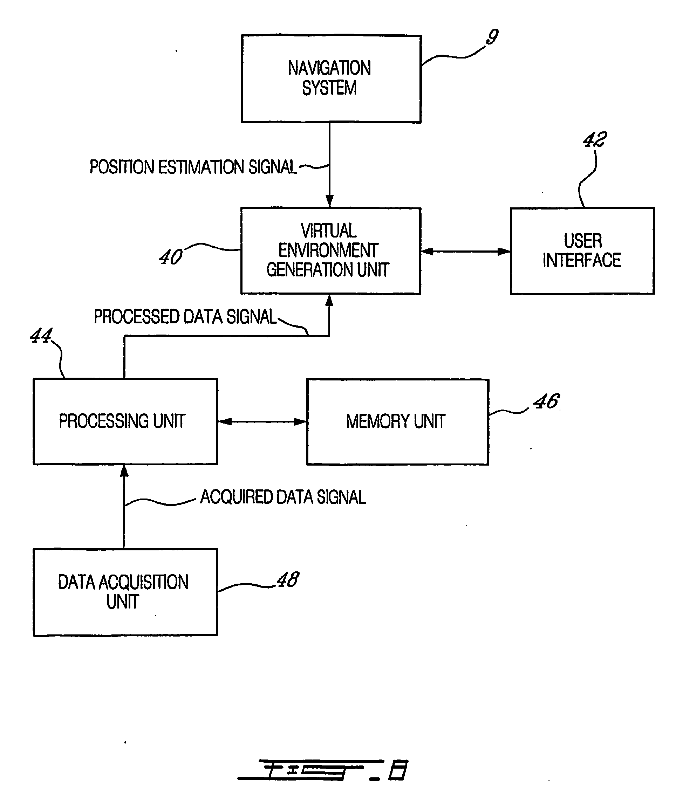

Now referring to Fig. 8, there is shown a block diagram which shows how the navigation system 9 may be advantageously used in a remotely operated submarine.

The system comprises the navigation system 9, a virtual environment generation unit 40, a user interface 42, a processing unit 44, a memory unit 46 and a data acquisition unit 48.

The virtual environment generation unit 40 generates a virtual environment where the remotely operated submarine operates as explained below.

The user interface 42 is used to display the generated virtual environment to an operator. The user interface 42 may be also used in order to control the remotely operated submarine.

The data acquisition unit 48 provides an acquired data signal. The data acquisition unit 48 may be any one of a camera, a sonar and a laser. The data acquisition unit 48 is used in order to provide-pertinent information collected in the surrounding of the remotely operated vehicle.

The processing unit 44 receives the acquired data signal, processes the received acquired data signal and provides the processed data to the virtual environment generation unit 40.

The memory unit 46 may be used in order to store at least one part of the processed data.

The virtual environment generation unit merges the position estimation signal and the processed data signal to generate the virtual environment. Preferably the generated virtual environment is a 3-dimension view of the remotely operated vehicle together with surrounding objects of interest. The objects of interest are preferably detected using the data acquisition unit 48. Alternatively, the objects of interest may also be inputted, by the operator, in the virtual environment generated by the virtual environment generation unit 40 using the user interface 42. It will be appreciated that the virtual environment may further comprise navigation data related to the remotely operated vehicle. Such navigation data may comprise at least one of orientation, speed, heading, etc.

It will be appreciated that in such embodiment the remotely operated vehicle may be advantageously used, due to its precise navigation system 9 providing the position estimation signal (position in real-time) in order to locate defects, in order to follow up on detected defects, in order to manipulate objects or in order to perform a 3D rebuilding of an immersed structure or of the sea bed.

In the case where the remotely operated vehicle is used to perform a 3D rebuilding of an immersed structure or of the sea bed, the data acquisition unit is a sonar.

In the case where an immersed structure is inspected, the immersed structure may be any one of a dam, an intake structure, a spillway, a stop log, a draft tube, a ship hull, or a bridge pillar.

In the case of a dam or a bridge pillar, cracks, defects, and rock-concrete interfaces may be inspected.

In the case of an intake structure, trash racks, gates, penstocks may be inspected.

In the case of a spillway, gate, concrete, steel and pier may be inspected.

Alternatively, it will be appreciated that hydroelectric turbines may be inspected from water, cavitations erosion damages and cracks may be also inspected.

Alternatively, it will be appreciated that a ship hull may be inspected to detect at least one of a defect, a foreign object and a security threat.

An operation arm may be also connected to the remotely operated vehicle and underwater tasks such as grinding, welding, cleaning, object grabbing may be performed. Stop logs may be unblocked also and damages may be located.

The embodiments of the invention described above are intended to be exemplary only. The scope of the invention is therefore intended to be limited solely by the scope of the appended claims.

**Claims**

1. A method for determining a position underwater in real-time of an object, said method comprising:

   sampling a first signal (X, Y, Z) corresponding to said position of said object at a first given frequency, with a mean position error equal to zero ;
   sampling a second signal corresponding to at least one of a velocity ($V_x$, $V_y$, $V_z$) and an acceleration ($A_x$, $A_y$, $A_z$) said object at a second given frequency higher than said first given frequency, resulting in a position estimate with a mean error which is not equal to zero;
   combining said first signal with said second signal to provide said position at said second given frequency by taking into account asynchronous data delivery and compensating for delays in measurements.

2. The method as claimed in claim 1, wherein said combining comprises also taking into account sensor faults when sampling the first signal and the second signal.

3. The method as claimed in claim 1, wherein said combining comprises associating a first weight to said first signal, and a second weight to said second signal.

4. The method as claimed in claim 3, wherein said associating of said first weight to said first signal, and said second weight to said second signal comprises using Kalman filtering.

5. The method as claimed in any one of claims I to 4, wherein said first signal is provided using an acoustic position sensor unit.

6. The method as claimed in claim 5, wherein said acoustic position sensor-unit provides an X, Y position signal and further wherein a Bathymeter sensor unit provides a Z position signal.

7. The method as claimed in any one of claims 1 to 6, wherein said second signal corresponds to said velocity, further wherein said sampling of said second signal comprises using a Doppler velocity sensor unit.

8. The method as claimed in any one of claims 1 to 6, wherein said second signal corresponds to said acceleration, further wherein said sampling of said second signal comprises using a gyroscope and accelerometer sensor unit.

9. An apparatus (9) for determining a position in real-time of an object underwater, said apparatus comprising

   a position sensor unit (10) having a mean error equal to zero for providing a position signal (X, Y, Z) of said object at a first given frequency;
   at least one of an instantaneous velocity sensor unit and an acceleration sensor unit (12) for providing at least one of a corresponding instantaneous velocity signal ($V_x$, $V_y$, $V_z$) and a corresponding instantaneous acceleration signa ($A_x$, $A_y$, $A_z$) at a second given frequency higher than said first given frequency; and
   a position providing unit 8 receiving and combining said position signal and said at least one of said corresponding instantaneous velocity signal and said corresponding instantaneous acceleration signal to provide said position signal in real-time at said second given frequency by taking into account asynchronous data delivery and compensating for delays in measurements.

10. The apparatus as claimed in claim 9 wherein said position providing unit comprises a Kalman filtering unit 22 receiving said position signal and said at least one of said instantaneous velocity signal and said instantaneous acceleration signal to provide said position signal in real-time for said object.

11. The apparatus as claimed in any one of claims 9 and 10, wherein said position sensor unit comprises an acoustic position sensor unit.

12. The apparatus as claimed in claim 10, wherein said acoustic position sensor unit provides an X, Y position signal, further wherein said apparatus further comprises a Bathymeter sensor unit providing a Z position signal.

13. The apparatus as claimed in any one of claims 9 to 12, wherein said instantaneous velocity sensor unit comprises a Doppler velocity sensor unit.

14. The apparatus as claimed in any one of claims 9 to 12, wherein said instantaneous velocity sensor unit comprises a gyroscope and accelerometer sensor unit.

15. The apparatus as claimed in any one of claims 9 to 14, wherein the position providing unit also takes into account sensor faults when combining said position signal and said at least one of said corresponding instantaneous velocity signal and said corresponding instantaneous acceleration signal.

16. A remotely operated object comprising an apparatus for determining a position in real-time as claimed in any one of claims 9 to 15.

**Patentansprüche**

1. Verfahren zum Bestimmen einer Unterwasserposition eines Objektes in Echtzeit, wobei das Verfahren die Schritte aufweist:

   Abtasten eines der Position des Objekts entsprechenden ersten Signals (X, Y, Z) mit einer ersten vorgegebenen Frequenz mit einem mittleren Positionsfehler von null;
   Abtasten eines einer Geschwindigkeit ($V_x$, $V_y$, $V_z$) und/oder einer Beschleunigung ($A_x$, $A_y$, $A_z$) des Objekts entsprechenden zweiten Signals mit einer zweiten vorgegebenen Frequenz, die höher ist als die erste vorgegebene Frequenz, wodurch ein Positionsschätzwert mit einem von null verschiedenen mittleren Fehler erhalten wird; und
   Kombinieren des ersten Signals und des zweiten Signals zum Bereitstellen der Position mit der zweiten vorgegebenen Frequenz unter Berücksichtigung einer asynchronen Datenübermittlung und einer Korrektur für Verzögerungen bei Messungen.

2. Verfahren nach Anspruch 1, wobei im Kombinierschritt außerdem Sensorfehler beim Abtasten des ersten Signals und des zweiten Signals berücksichtigt werden.

3. Verfahren nach Anspruch 1, wobei der Kombinierschritt das Zuweisen eines ersten Gewichts zum ersten Signal und eines zweiten Gewichts zum zweiten Signal aufweist.

4. Verfahren nach Anspruch 3, wobei das Zuweisen des ersten Gewichts zum ersten Signal und des zweiten Gewichts zum zweiten Signal die Verwendung einer Kalman-Filterung beinhaltet.

5. Verfahren nach einem der Ansprüche 1 bis 4, wobei das erste Signal unter Verwendung einer akustischen Positionssensoreinheit bereitgestellt wird.

6. Verfahren nach Anspruch 5, wobei die akustische Positionssensoreinheit ein X,Y-Positionssignal bereitstellt, und wobei ferner eine Bathometersensoreinheit ein Z-Positionssignal bereitstellt.

7. Verfahren nach einem der Ansprüche 1 bis 6, wobei das zweite Signal der Geschwindigkeit entspricht, und wobei ferner das Abtasten des zweiten Signals die Verwendung einer Dopplergeschwindigkeitssensoreinheit aufweist.

8. Verfahren nach einem der Ansprüche 1 bis 6, wobei das zweite Signal der Beschleunigung entspricht, und wobei ferner das Abtasten des zweiten Signals die Verwendung einer Gyroskop- und Beschleunigungssensoreinheit aufweist.

9. Vorrichtung (9) zum Bestimmen einer Unterwasserposition eines Objektes in Echtzeit, wobei die Vorrichtung aufweist:

eine Positionssensoreinheit (10) mit einem mittleren Fehler von null zum Bereitstellen eines Positionssignals (X, Y, Z) des Objekts mit einer ersten vorgegebenen Frequenz;
eine Ist-Geschwindigkeitssensoreinheit und/oder eine Ist-Beschleunigungssensoreinheit (12) zum Bereitstellen eines entsprechenden Ist-Geschwindigkeitssignals ($V_x$, $V_y$, $V_z$) und/oder eines entsprechenden Ist-Beschleunigungssignals ($A_x$, $A_y$, $A_z$) mit einer zweiten vorgegebenen Frequenz, die höher ist als die erste vorgegebene Frequenz; und
eine Positionsbereitstellungseinheit (8), die das Positionssignal und das entsprechende Ist-Geschwindigkeitssignal und/oder das entsprechende Ist-Beschleunigungssignal empfängt und kombiniert, zum Bereitstellen des Positionssignals in Echtzeit mit der zweiten vorgegebenen Frequenz unter Berücksichtigung einer asynchronen Datenübermittlung und einer Korrektur für Verzögerungen bei Messungen.

10. Vorrichtung nach Anspruch 9, wobei die Positionsbereitstellungseinheit eine Kalman-Filtereinheit (22) aufweist, die das Positionssignal und das Ist-Geschwindigkeitssignal und/oder das Ist-Beschleunigungssignal empfängt, um das Positionssignal des Objekts in Echtzeit bereitzustellen.

11. Vorrichtung nach Anspruch 9 oder 10, wobei die Positionssensoreinheit eine akustische Positionssensoreinheit aufweist.

12. Vorrichtung nach Anspruch 10, wobei die akustische Positionssensoreinheit ein X,Y-Positionssignal bereitstellt, und wobei die Vorrichtung ferner eine Bathometersensoreinheit zum Bereitstellen eines Z-Positionssignals aufweist.

13. Vorrichtung nach einem der Ansprüche 9 bis 12, wobei die Ist-Geschwindigkeitssensoreinheit eine Dopplergeschwindigkeitssensoreinheit aufweist.

14. Vorrichtung nach einem der Ansprüche 9 bis 12, wobei die Ist-Geschwindigkeitssensoreinheit eine Gyroskop- und Beschleunigungssensoreinheit aufweist.

15. Vorrichtung nach einem der Ansprüche 9 bis 14, wobei die Positionsbereitstellungseinheit beim Kombinieren des Positionssignals und des entsprechenden Ist-Geschwindigkeitssignals und/oder des entsprechenden Ist-Beschleunigungssignals auch Sensorfehler berücksichtigt.

16. Ferngesteuertes Objekt mit einer Vorrichtung zum Bestimmen einer Position in Echtzeit nach einem der Ansprüche 9 bis 15.

**Revendications**

1. Procédé pour déterminer une position sous l'eau en temps réel d'un objet, ledit procédé comprenant :

l'échantillonnage d'un premier signal (X, Y, Z) correspondant à ladite position dudit objet à une première fréquence donnée, avec une erreur de position moyenne égale à zéro ;
l'échantillonnage d'un second signal correspondant à au moins une parmi une vitesse ($V_x$, $V_y$, $V_z$) et une accélération ($A_x$, $A_y$, $A_z$) dudit objet à une seconde fréquence donnée supérieure à ladite première fréquence donnée, résultant en une estimation de position avec une erreur moyenne qui n'est pas égale à zéro ;
la combinaison dudit premier signal avec ledit second signal pour fournir ladite position à ladite seconde fréquence donnée en prenant en compte une distribution de données asynchrone et en compensant des retards dans des mesures.

2. Procédé selon la revendication 1, dans lequel ladite combinaison comprend également la prise en compte de défaillances de capteur lors de l'échantillonnage du premier signal et du second signal.

3. Procédé selon la revendication 1, dans lequel ladite combinaison comprend l'association d'un premier poids audit premier signal, et d'un second poids audit second signal.

4. Procédé selon la revendication 3, dans lequel ladite association dudit premier poids audit premier signal, et dudit second poids audit second signal comprend l'utilisation de filtrage de Kalman.

5. Procédé selon une quelconque des revendications 1 à 4, dans lequel ledit premier signal est fourni en utilisant une unité de capteur de position acoustique.

6. Procédé selon la revendication 5, dans lequel ladite unité de capteur de position acoustique fournit un signal de position X, Y et dans lequel en outre une unité de capteur bathymétrique fournit un signal de position Z.

7. Procédé selon une quelconque des revendications 1 à 6, dans lequel ledit second signal correspond à ladite vitesse, dans lequel en outre ledit échantillonnage dudit second signal comprend l'utilisation d'une unité de capteur de vitesse Doppler.

8. Procédé selon une quelconque des revendications 1 à 6, dans lequel ledit second signal correspond à ladite accélération, dans lequel en outre ledit échantillonnage dudit second signal comprend l'utilisation d'une unité de capteur gyroscopique et accélérométrique.

9. Appareil (9) pour déterminer une position en temps réel d'un objet sous l'eau, ledit appareil comprenant :

une unité de capteur de position (10) comportant une erreur moyenne égale à zéro pour fournir un signal de position (X, Y, Z) dudit objet à une première fréquence donnée ;
au moins une parmi une unité de capteur de vitesse instantanée et une unité de capteur d'accélération (12) pour fournir au moins un parmi un signal de vitesse instantanée correspondant et un signal d'accélération instantanée correspondant ($A_x$, $A_y$, $A_z$) à une seconde fréquence donnée supérieure à ladite première fréquence donnée ; et
une unité de fourniture de position (8) recevant et combinant ledit signal de position et ledit au moins un parmi ledit signal de vitesse instantanée correspondant et ledit signal d'accélération instantanée correspondant pour fournir ledit signal de position en temps réel à ladite seconde fréquence donnée en prenant en compte une distribution de données asynchrone et en compensant des retards dans des mesures.

10. Appareil selon la revendication 9, dans lequel ladite unité de fourniture de position comprend une unité de filtrage de Kalman (22) recevant ledit signal de position et ledit au moins un parmi ledit signal de vitesse instantanée et ledit signal d'accélération instantanée pour fournir ledit signal de position en temps réel pour ledit objet.

11. Appareil selon une quelconque des revendications 9 et 10, dans lequel ladite unité de capteur de position comprend une unité de capteur de position acoustique.

12. Appareil selon la revendication 10, dans lequel ladite unité de capteur de position acoustique fournit un X, Y signal de position, dans lequel en outre ledit appareil comprend en outre une unité de capteur bathymétrique fournissant un signal de position Z.

13. Appareil selon une quelconque des revendications 9 à 12, dans lequel ladite unité de capteur de vitesse instantanée comprend une unité de capteur de vitesse Doppler.

14. Appareil selon une quelconque des revendications 9 à 12, dans lequel ladite unité de capteur de vitesse instantanée comprend une unité de capteur gyroscopique et accélérométrique.

15. Appareil selon une quelconque des revendications 9 à 14, dans lequel l'unité de fourniture de position prend également en compte des défaillances de capteur lors de la combinaison dudit signal de position et dudit au moins un parmi ledit signal de vitesse instantanée correspondant et ledit signal d'accélération instantanée correspondant.

16. Objet commandé à distance comprenant un appareil pour déterminer une position en temps réel selon une quelconque des revendications 9 à 15.

PLURALITY OF SENSORS *30*

*10*       *12*       *14*

| ABSOLUTE DATA SENSOR UNIT | RELATIVE DATA SENSOR UNIT | ORIENTATION DATA SENSOR UNIT |

Vx, Vy, Vz SIGNAL

Ax, Ay, Az SIGNAL

ORIENTATION DATA SIGNAL

X, Y, Z SIGNAL

DATA PRE-PROCESSING UNIT    *20*

PROCESSED DATA

KALMAN FILTERING UNIT    *22*

NAVIGATION UNIT *8*

POSITION ESTIMATION SIGNAL

NAVIGATION SYSTEM *9*

$\overline{\underline{\text{FIG. }1}}$

13

Virtual submarine signal

DVL_only position signal

Kalman position signal

Time (s)

FIG_2

Kalman DVL active signal

Kalman position signal

Virtual submarine signal

V positioning signal

Time (s)

FIG_3

14

_FIG. 4_

_FIG. 5_

_FIG. 6_

_FIG. 7_

NAVIGATION
SYSTEM

*9*

POSITION ESTIMATION SIGNAL

*42*

*40*

VIRTUAL
ENVIRONMENT
GENERATION UNIT

USER
INTERFACE

PROCESSED DATA SIGNAL

*44*

PROCESSING UNIT

MEMORY UNIT

*46*

ACQUIRED DATA SIGNAL

DATA ACQUISITION
UNIT

*48*

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CÔTÉ, J. ; LAVALLÉE, J.** Augmented Reality Graphic, Interface for Upstream Dam Inspection. *SPIE, Telemanipulator and Telepresence Technologies II, Philadelphia,* October 1995
- **WHITCOMB, L. L. ; YOERGER, D. R. ; HANUMANT, S.** Combined Doppler/LBL Based Navigation of Underwater Vehicles. *Proc. of the 11th International Symposium on Unmanned Untethered Submersible Technology, Durham, NH,* August 1999
- **SPINDEL, R. C. ; PORER, R.P. ; MARQUET, W. M. ; DURHAM, J. L.** A high-resolution pulse-Doppler underwater acoustic navigation system. *IEEE Journal of Oceanic Engineering,* 1976, vol. OE-1 (1), 6-13
- **BROWN, R.G. ; HWANG, P.Y.C.** Introduction to Random Signals and Applied Kalman Filtering. John Wiley & Sons, 1997